(19) Europäisches Patentamt
European Patent Office
Office européen des brevets

(11) EP 2 572 993 B1

(12) EUROPÄISCHE PATENTSCHRIFT

(45) Veröffentlichungstag und Bekanntmachung des Hinweises auf die Patenterteilung:
02.04.2014 Patentblatt 2014/14

(51) Int Cl.:
*B64F 1/30* (2006.01)

(21) Anmeldenummer: 12183669.6

(22) Anmeldetag: 10.09.2012

(54) **Prüfvorrichtung für Gangways**

Testing device for gangways

Dispositif de contrôle pour passerelles

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2011 DE 102011083086**

(43) Veröffentlichungstag der Anmeldung:
**27.03.2013 Patentblatt 2013/13**

(73) Patentinhaber: **Flughafen München GmbH**
**85326 München (DE)**

(72) Erfinder: **Spindler, Johann**
**83527 Haag in Oberbayern (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
**FR-A1- 2 573 723    US-A1- 2003 136 898**

**Beschreibung**

Die vorliegende Erfindung betrifft eine Prüfvorrichtung für Gangways, insbesondere mobile Passagiertreppen und Fluggastbrücken sowie ein Verfahren zur Überprüfung von Gangways.

In der Luftfahrt werden unter Gangways Zugangsbrücken oder Zugangstreppen zum Besteigen oder Verlassen eines Flugzeuges bezeichnet, die Bestandteil eines Flugzeugs selbst oder Teil der Flughafeninfrastruktur sind. In letzterem Fall (auf den sich auch die Erfindung bezieht und somit den Begriff Gangway im Rahmen der Erfindung definiert) unterscheidet man zwischen mobilen Zugangstreppen einerseits, die manuell oder mittels separater oder integrierter Zugfahrzeuge bewegt werden. Andererseits gibt es sogenannte Fluggastbrücken, die in der Regel mit dem Flughafengebäude verbunden und zwei- oder dreidimensional bewegbar sind, um so an die Kabinentür eines Flugzeugs herangefahren zu werden.

Insbesondere Zugangstreppen bzw. Passagiertreppen aber auch Fluggastbrücken sind zur Einhaltung eines festen Abstandes (bspw. 20-30cm) in der vertikalen zwischen Flugzeugtür und oberer Treppenplattform (im Folgenden auch als Gangwayplattform bezeichnet) mit einer sogenannten Nachführeinrichtung ausgestattet. Die Nachführeinrichtung besteht aus einem (federnd gelagerten) Tastrad als Teil der Gangway, das an den Flugzeugrumpf angelegt wird. Auf diese Weise wird die Bewegung des Flugzeugrumpfes beim Be- bzw. Entladen des Flugzeuges und folglich Absenken bzw. Anheben des Flugzeugrumpfes aufgrund der Gewichtszunahme bzw. der Gewichtsabnahme durch eine Drehung des Tastrades erkannt, wenn dieses aufgrund einer relativen Höhenänderung am Flugzeugrumpf abrollt. Eine Steuerung bzw. Regelung der Gangway erfasst die Drehbewegung des Tastrades und veranlasst sodann die Nachführung der Treppenplattform, damit die Stufenhöhe zwischen Flugzeugtür und Treppenplattform im Wesentlichen konstant bleibt.

Die Überprüfung der Nachführeinrichtung gestaltete sich in der Vergangenheit schwierig. So wurde die Funktionsfähigkeit der Nachführeinrichtung durch manuelles Drehen des Tastrades ohne genaue Referenz durchgeführt. Dazu hat ein Mitarbeiter von der Plattform der Passagiertreppe aus das Tastrad per Hand gedreht, was zum einen zu nur ungenauen Ergebnissen führt, da das Verhältnis von Tastraddrehung zur Nachführung bzw. zum Höhenausgleich nicht explizit erfasst wurde, und zum anderen haben sich die Mitarbeiter in Gefahr begeben, da sie sich in mehreren Metern Höhe von der Plattform zum Tastrad nach außen beugen mussten.

Es ist somit eine Aufgabe der Erfindung, eine Prüfvorrichtung für Gangways sowie ein Verfahren zur Prüfung von Gangways bereitzustellen, mit denen auf einfache und sichere Weise eine genaue Prüfung der Nachführeinrichtung einer Gangway möglich ist.

Diese Aufgabe wird durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird eine Prüfvorrichtung für Gangways mit Nachführvorrichtung, insbesondere für mobile Passagiertreppen oder Fluggastbrücken, bereitgestellt, die aufweist: eine höhenverstellbare Plattform mit im Wesentlichen vertikal ausgerichteter Prüffläche, die derart ausgebildet ist, dass sie mit einer Abtastvorrichtung der Nachführvorrichtung der Gangway zu deren Überprüfung interagieren kann, eine Verfahrvorrichtung zum Verfahren der Plattform wenigstens in vertikaler Richtung, und eine Messvorrichtung zum Bestimmen einer Abweichung einer vertikalen Nachführung (der Nachführvorrichtung) der zu prüfenden Gangway. Die Abtastvorrichtung ist vorzugsweise als physische oder optische Abtastvorrichtung ausgebildet.

Mit der erfindungsgemäßen Prüfvorrichtung wird es ermöglicht, die Funktion der Nachführvorrichtung einer Gangway durch Simulation der Flugzeugbewegung mittels der Plattform und über dessen Prüffläche auf einfache Weise zu überprüfen. Da die Mitarbeiter zur Überprüfung mittels der Prüfvorrichtung auf der Gangwayplattform oder sogar auf dem Boden bleiben können, wird zudem die Sicherheit für das Prüfpersonal erhöht. Des Weiteren ermöglicht die Prüfvorrichtung eine exakte Messung der Ist-Abweichung der Nachführvorrichtung von der maximalen Soll-Abweichung, was ein genaues Einstellen der Nachführvorrichtung ermöglicht. Durch die höhenverstellbare Plattform wird es zudem ermöglicht, dass alle bekannten Größen von Passagiertreppen oder Fluggastbrücken getestet werden können. Somit wird eine Vorrichtung bereitgestellt, mit der einfach und sicher bestimmt werden kann, ob die Nachregulierung von (Flughafen-)Gangways adäquat arbeitet und wie groß eine eventuelle Abweichung tatsächlich ist.

Vorzugsweise ist die Prüffläche derart ausgebildet, dass an die Prüffläche ein Tastrad als physische Abtastvorrichtung der Nachführvorrichtung der Gangway zu deren Überprüfung anlegbar ist. Besonders vorzugsweise weist die Prüffläche dann Bereiche mit unterschiedlicher Oberflächenbeschaffenheiten mit unterschiedlichem Reibungskoeffizienten auf, wobei sich die jeweiligen Bereiche vorzugsweise in vertikaler Richtung über die gesamte Höhe der Prüffläche erstrecken. Es ist somit möglich, die Funktionsfähigkeit der Nachführvorrichtung auch bzgl. des Einsatzes bei unterschiedlichen Flugzeugrumpfoberflächen (bspw. aufgrund unterschiedlicher Materialien des Flugzeugrumpfes, wie bspw. Stahl, Aluminium, oder unterschiedlich schlüpfrige Lackierungen) zu testen. Des Weiteren ermöglichen die unterschiedlichen Bereiche eine Simulation von unterschiedlichen Witterungsbedingungen, wie bspw. Regen oder Schnee oder Hitze und Kälte und dergleichen.

Vorzugsweise weist die Prüffläche eine gewölbte oder individuell wölbbare Oberflächenkontur auf. Eine derartige Wölbung fällt erfindungsgemäß unter den Begriff einer im Wesentlichen vertikal ausgerichteten Prüffläche, da die Ausrichtung der Außenhaut des Flugzeugrumpfes im Bereich der Flugzeugtüren in der Regel eine im Wesentlichen vertikale Ausrichtung hat. Somit ist es möglich, die Außenkontur eines Flugzeugrumpfes genauer zu simulieren. Um unterschiedliche Flugzeugtypen zu simulieren, kann entweder die jeweilige Plattform bzw. Prüffläche ausgetauscht werden, oder die Prüffläche selbst ist wölbbar ausgebildet, so dass dessen Wölbung dem Flugzeugtyp entsprechend angepasst werden kann. Auf diese Weise kann die Prüfgenauigkeit und Flexibilität der Anlage weiter erhöht werden.

Vorzugsweise ist die Prüffläche mit der Plattform integral ausgebildet oder lösbar verbunden. In letzterem Fall kann die Prüffläche zur Simulation unterschiedlicher Flugzeugtypen, Witterungsbedingungen oder sonstiger Bedingungen und Einflüsse individuell ausgebildet und einfach ausgewechselt und somit mit der Vorrichtung verbunden werden. Die Vorrichtung kann somit an die vorliegenden Bedingungen individuell angepasst werden.

Vorzugsweise ist die Plattform entlang vertikaler Schienen verfahrbar, so dass eine sichere Führung derselben gewährleistet ist.

Vorzugsweise ist die Verfahrvorrichtung eine mechanische, elektrische, hydraulische oder pneumatische Verfahrvorrichtung, die vorzugsweise Seilwinden, Flaschenzüge, Kettentriebe, Pneumatikzylinder oder Hydraulikzylinder aufweist. Im Falle von Seil- oder Kettentrieben (auch umfassend Flaschenzüge und dergleichen) können die Seile oder Ketten oder ähnliche Zugmittel mittels Elektromotoren angetrieben werden, um die Plattform entsprechend anzuheben oder abzusenken.

Die Prüfvorrichtung kann ferner eine Absturzsicherung zum Vermeiden eines ungebremsten Herabfallens der Plattform im Störungsfall aufweisen. Vorzugsweise weist die Absturzsicherung einen Geschwindigkeitsbegrenzer auf, der derart ausgebildet ist, dass er bei Überschreitung eines vorgegebenen Geschwindigkeitsgrenzwertes den Antrieb abgeschaltet und die Plattform vorzugsweise mechanisch zum Stillstand bremst. Auf diese Weise kann die Sicherheit der Anlage auch bei Ausfall von die Plattform tragenden Teilen gesteigert werden.

Vorzugsweise kann die Plattform im Bereich der Prüffläche oder die Prüffläche selbst eine Temperaturvorrichtung (Kühlvorrichtung und/oder Heizvorrichtung) aufweisen, um die Prüffläche auf eine vorbestimmte Temperatur einzustellen (also abzukühlen bzw. zu erwärmen) und die Temperatur vorzugsweise konstant zu halten. Die Temperaturvorrichtung kann dazu auf der der Prüfoberfläche der Prüffläche abgewandten Seite vorgesehen sein. Die Kühlvorrichtung kann bspw. Kühlschlangen, durch die ein Kühlfluid geleitet wird, oder dergleichen umfassen, während die Heizvorrichtung bspw. Heizschlangen, durch die ein heißes Fluid geleitet wird, oder elektrische Heizstäbe oder dergleichen aufweisen. Auf diese Weise wird es ermöglicht, die Funktionsfähigkeit der Nachführvorrichtung auch auf heißen (bspw. im Hochsommer) bzw. kalten (bspw. im Winter) Flugzeugrümpfen zu simulieren und somit die Genauigkeit der Prüfergebnisse zu steigern.

Die Plattform bzw. die Prüffläche kann eine horizontal vorstehende Flugzeugtürsimulationsvorrichtung aufweisen. Mittels dieser kann das Vorhandensein einer Flugzeugtüre zum Testen eines Türdetektors der Gangway simuliert werden. Bei Kontakt des Türdetektors wird ein Absacken der Gangway bzw. Gangwayplattform hervorgerufen, dessen Höhe mittels der Prüfvorrichtung erfasst werden kann.

Die Messvorrichtung kann eine Messskala oder einen Sensor umfassen, die auf einfache Weise abgelesen bzw. ausgewertet werden können. Auf Basis der genau erfassten Daten kann eine Einstellung der Nachführvorrichtung in exakter Weise vorgenommen und eine eventuelle Abweichung der Nachführung leicht erfasst (abgelesen, gemessen) werden. Somit wird ferner eine im Weiteren beschriebene exakte Steuerung der Verfahrvorrichtung erzielt.

Vorzugsweise ist die Plattform bzw. die Prüffläche ferner in der horizontalen Richtung und vorzugsweise orthogonal zur Prüfoberfläche der Prüffläche verfahrbar. In diesem Fall ist die Verfahrvorrichtung ferner zum Verfahren der Plattform bzw. der Prüffläche in horizontaler Richtung ausgebildet. Dies ermöglicht die Überprüfung der Nachführvorrichtung der Gangway auch in der Horizontalen. Die Prüfvorrichtung kann ferner einen Druckaufnahmesensor (im Folgenden auch als Drucksensor bezeichnet) zum Erfassen und Messen des Anpressdruckes einer Gangwayplattform aufweisen, um die Funktionsfähigkeit der Nachführvorrichtung der Gangway bezüglich eines zu harten Anfahrens der Gangway an den Flugzeugrumpf zu simulieren. Des Weiteren kann die Messvorrichtung eine in horizontaler Richtung und von der Prüffläche (vorzugsweise im Wesentlichen orthogonal) weg gerichtete Messskala aufweisen, mittels der eine Abweichung in der horizontalen Nachführung erfasst (gemessen, abgelesen) werden kann.

Die Prüfvorrichtung kann ferner ein mit der Plattform verbundenes Gegengewicht aufweisen, um das Gewicht der Plattform zu kompensieren, wobei das Gegengewicht vorzugsweise über einen Seilzug mit der Plattform verbunden ist, der besonders vorzugsweise über eine an einem Rahmen der Prüfvorrichtung aufgehängte Umlenkvorrichtung geführt ist. Auf diese Weise kann die Anlage, insbesondere die Verfahrvorrichtung, entlastet und somit die Lebensdauer der Anlage gesteigert werden.

Vorzugsweise weist die Prüfvorrichtung ferner eine Steuerung zum Ansteuern der Verfahrvorrichtung auf. Besonders vorzugsweise weist die Steuerung ein Bedienpult auf, welches auf der Basis der Prüfvorrichtung und/oder an der Plattform und/oder als Fernsteuereinrichtung vorgesehen ist. Die Bedienung der Plattform wird somit vereinfacht und ermöglicht das Durchführen des Prüfvorganges direkt an der Prüfvorrichtung. Dabei kann das Prüfpersonal sowohl auf dem Boden arbeiten als auch direkt auf der Gangwayplattform, von wo aus der Zugriff auf die mechanischen Teile der Nachführvorrichtung vereinfacht ist. Insbesondere bei dem Einsatz mobiler Prüfvorrichtungen, wie sie im Weiteren beschrieben werden, kann durch die Verwendung von Bedienelementen bzw. Bedienpulten als Fernsteuereinrichtungen der Einsatz der Prüfvorrichtung und deren Flexibilität gesteigert werden. In diesem Fall ist der Austausch eines defekten Bedienelements durch eine neue Fernsteuereinrichtung ohne Eingriffe in das System durch einfachen Austausch der Geräte möglich.

Gemäß einem zweiten Aspekt ist die Erfindung auf eine mobile Prüfvorrichtung gerichtet, die eine verfahrbare Basis aufweist, auf der eine erfindungsgemäße Prüfvorrichtung vorgesehen bzw. angeordnet ist. Somit ist die Prüfvorrichtung mobil einsetzbar und kann zu den zu prüfenden Geräten bewegt werden. Diese können somit innerhalb ihres vorgesehenen Einsatzbereichs verbleiben, was die Prüfdauer verkürzt. Zudem ist es möglich, die Prüfvorrichtung auch für Fluggastbrücken einfach einzusetzen, da sie direkt zu diesen hingefahren werden kann.

Gemäß einem weiteren Aspekt betrifft die Erfindung ein Verfahren zur Überprüfung einer Nachführvorrichtung einer Gangway, insbesondere für mobile Passagiertreppen oder Fluggastbrücken. Das erfindungsgemäße Verfahren umfasst dabei die folgenden Schritte: Interagieren einer Abtastvorrichtung (vorzugsweise einer physischen oder optischen Abtastvorrichtung)der Nachführvorrichtung der Gangway mit einer im Wesentlichen vertikal ausgerichteten Prüffläche einer höhenverstellbaren Plattform einer Prüfvorrichtung gemäß der Erfindung, Verfahren der Plattform in vertikaler Richtung mittels einer Verfahrvorrichtung, und Erfassen und Messen der relativen vertikalen Abweichung einer Gangwayplattform der Gangway zu der Plattform nach der vertikalen Nachführung der zu prüfenden Gangway.

Das Verfahren ermöglicht somit ein sicheres und zuverlässiges Überprüfen der Nachführvorrichtung einer Gangway und erfüllt ebenso die unter dem ersten Aspekt angeführten Vorteile.

Vorzugsweise weist das Verfahren ferner die folgenden Schritte nach dem Beginn der Interaktion der Abtastvorrichtung mit der Prüffläche auf: Verfahren der Plattform in horizontaler Richtung senkrecht zur Gangway hin oder von dieser weg, und Erfassen und Messen des Anpressdruckes der Gangwayplattform der Gangway bezüglich der Plattform mittels eines Druckaufnahmesensors der Plattform und/oder einer in horizontaler Richtung und von der Prüffläche weg gerichteten Messskala nach der horizontalen Nachführung der zu prüfenden Gangway. Folglich kann mit dem Verfahren auch eine horizontale Nachführung sicher erfasst werden.

Vorzugsweise umfasst der Schritt der Interaktion der physischen Abtastvorrichtung mit der Prüffläche das Anlegen eines Tastrades der Nachführvorrichtung der Gangway an die im Wesentlichen vertikal ausgerichtete Prüffläche der höhenverstellbaren Plattform der Prüfvorrichtung.

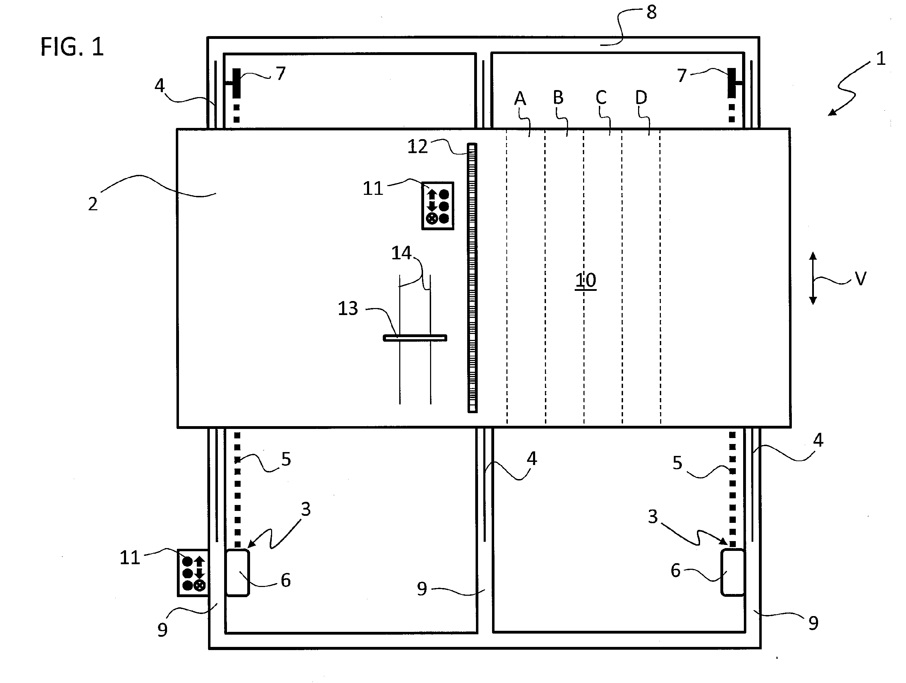

Weitere Vorteile der Erfindung sowie vorteilhafte Ausgestaltungen werden im Folgenden anhand der Zeichnung der einzigen Figur 1 beschrieben.

Figur 1 zeigt ein Ausführungsbeispiel einer erfindungsgemäßen Prüfvorrichtung 1 für Gangways mit Nachführvorrichtung (bspw. mobile Passagiertreppen oder Fluggastbrücken).

Die Prüfvorrichtung weist eine in vertikaler Richtung (siehe Doppelpfeil V) höhenverstellbare Plattform 2 auf. Diese Plattform 2 weist eine Verfahrvorrichtung 3 auf, um die Plattform 2 in wenigstens vertikaler Richtung V zu verfahren. Die Verfahrvorrichtung 3 ist vorzugsweise eine mechanisch (bspw. mittels Seilwinden, Flaschenzügen oder Kettentrieben; bspw. manuell antreibbar), elektrisch (bspw. mittels Elektromotor angetriebene Zugmittel; siehe Figur 1), pneumatisch (bspw. mittels Pneumatikzylinder) oder hydraulisch (bspw. mittels Hydraulikzylinder) angetriebene Verfahrvorrichtung 3, um die Plattform 2 in ihrer Höhe gezielt zu verstellen, also zu verfahren. Dazu ist die Plattform 2 vorzugsweise entlang vertikaler Schienen 4 geführt und verfahrbar.

Gemäß Figur 1 ist die Plattform 2 an zwei Zugmitteln 5 in Form von Endlosketten aufgehängt, die jeweils über einen vorzugsweise in vertikaler Richtung unten bzgl. der Prüfvorrichtung 1 angeordneten Elektromotor 6 angetrieben und über eine in vertikaler Richtung oben bzgl. der Prüfvorrichtung 1 angeordnete Umlenkvorrichtung 7 (bspw. ein Zahnrad, eine Umlenkrolle oder dergleichen) umgelenkt und zu dem Elektromotor 6 in Form einer Endlosschleife zurückgeführt werden. Durch Antreiben der Elektromotoren 6 werden die Ketten 5 in Bewegung versetzt, wodurch die Plattform 2 entsprechend in vertikaler Richtung verfahren werden kann. Die Erfindung ist jedoch nicht auf den vorbeschriebenen Antrieb (Verfahrvorrichtung 3) der Plattform 2 beschränkt, solange ein vertikales Verfahren derselben ermöglicht ist.

Die Plattform 2 sowie deren Verfahrvorrichtung 3 sind vorzugsweise an einem Rahmen bzw. Gestell 8 sicher angebracht. An diesem Rahmen 8 sind vorzugsweise auch die Schienen 4 vorgesehen, die sich vorzugsweise entlang vertikal ausgerichteter Träger 9 des Rahmens 8 erstrecken.

Um das Gewicht der über die Verfahrvorrichtung 3 aufgehängten Plattform 2 zu kompensieren, kann in bekannter Weise ein Gegengewicht vorgesehen sein, wie dies beispielsweise bei Aufzugsanlagen (Fahrstühlen) bekannt ist. So kann das Gegengewicht beispielsweise an der Rückseite der Plattform 2 an der Verfahrvorrichtung 3 in der Weise angebracht sein, dass es an bzgl. der Plattformseite der Zugmittel 5 gegenläufig laufenden Zugmittelteilen befestigt ist; also in einem Bereich der Zugmittel 5, die bzgl. der Plattform 2 der Umlenkvorrichtung 7 nachgeordnet ist. Es ist auch denkbar, dass das Gegengewicht unabhängig von der Verfahrvorrichtung 3 vorgesehen ist. So kann das Gegengewicht bspw. mittels eines Seilzuges mit der Plattform 2 verbunden sein und ebenfalls über eine weitere (nicht dargestellte) in vertikaler Richtung oben bzgl. der Prüfvorrichtung 1 angeordnete Umlenkvorrichtung umgelenkt werden. Diese Umlenkvorrichtung kann bspw. von einem Querträger des Rahmens 8 getragen werden, so dass die Gewichtsbelastung bzgl.

der Verfahrvorrichtung 3 minimiert ist.

Die Prüfvorrichtung 1 kann ferner eine Absturzsicherung aufweisen, um beim Versagen von Bauteilen (bspw. der Verfahrvorrichtung 3; z.B. bei Ausfall des Elektromotors 6 oder Bruch der Zugmittel 5) ein ungebremstes Herabfallen der Plattform 2 zu vermeiden. Hierzu kann bspw. in aus Aufzugsanlagen bekannter Weise ein Geschwindigkeitsbegrenzer vorgesehen sein, der bei Überschreitung eines vorgegebenen Geschwindigkeitsgrenzwertes den Antrieb (bspw. elektronisch) abgeschaltet und die Plattform 2 vorzugsweise mechanisch zum Stillstand bremst. Diese Sicherheitsvorrichtung ist vorzugsweise unabhängig von anderen Teilen der Verfahrvorrichtung 3 oder sonstigen Betriebsteilen der Anlage und funktioniert mechanisch, also selbst bei einem Stromausfall. Zum mechanischen Abbremsen der Plattform 2 kann diese bspw. mit Bremsbacken ausgestattet sein, die mit den Schienen 4 oder einer separaten Bremsvorrichtung in Eingriff gebracht werden können.

Die Plattform 2 weist eine im Wesentlichen vertikal ausgerichtete Prüffläche 10 auf. Die Prüffläche 10 ist derart ausgebildet, dass sie mit einer Abtastvorrichtung der Nachführvorrichtung der Gangway zu deren Überprüfung interagieren kann. Die Abtastvorrichtung kann dabei bspw. eine physische oder optische Abtastvorrichtung sein. Hierzu kann bspw. an die Prüffläche 10 ein in der Regel federnd gelagertes Tastrad als physische Abtastvorrichtung der Nachführvorrichtung der Gangway zu deren Überprüfung anlegbar sein. Auch ist das Abtasten der Prüfoberfläche der Prüffläche 10 mittels einer vorbekannten optischen Abtastvorrichtung alternativ oder zusätzlich denkbar. Die Erfindung ist jedoch nicht auf das Überprüfen einer Nachführvorrichtung mit optischer und/oder physischer Abtastvorrichtung beschränkt, sondern die Prüffläche 10 kann auch zum Interagieren mit andersartigen Abtastvorrichtungen und Überprüfen entsprechend anders ausgebildeter Nachführvorrichtungen ausgebildet sein.

Die Prüffläche 10 kann integral mit der Plattform 2 ausgebildet sein. Es ist aber auch denkbar, dass die Prüffläche 10 bspw. als plattenartiges Element lösbar und somit austauschbar an der Plattform 2 vorgesehen bzw. angebracht ist. Die Prüffläche 10 erstreckt sich wenigstens über einen Teilbereich oder auch die gesamte Fläche der Plattform 2; vorzugsweise erstreckt sich die Prüffläche 10 wenigstens über die vorgesehenen Abrollfläche des Tastrades der zu prüfenden Gangway, besonders vorzugsweise wenigstens über die gesamte Höhe der Plattform 2. Indem die Prüffläche 10 lediglich den (Ab-)Tastbereich der Abtastvorrichtung der Gangway abdeckt, kann eine lösbare Prüffläche 10 möglichst klein ausgebildet werden, so dass sie für einen Austausch handlich ist und von dem Prüfpersonal ohne zusätzliche Hilfsmittel (wie Kräne oder dergleichen) leicht gewechselt werden kann.

In einer besonders bevorzugten Ausführungsform weist die Prüffläche 10 Bereiche A, B, C, D mit unterschiedlicher Oberflächenbeschaffenheiten auf. Dies bedeutet, dass die jeweiligen Bereiche sich bspw. bzgl. ihres Reibungskoeffizienten unterscheiden. Die unterschiedlichen Bereiche A, B, C, D ermöglichen somit eine Simulation von unterschiedlichen Witterungsbedingungen, wie bspw. Regen oder Schnee und dergleichen, oder unterschiedlicher Materialien des Flugzeugrumpfes, wie bspw. Stahl, Aluminium, oder unterschiedlich schlüpfrige Lackierungen, insbesondere bei Einsatz von physischen Abtastvorrichtungen, wie bspw. dem vorgenannten Tastrad.

Im Falle des Überprüfens einer Nachführvorrichtung mit optischer Abtastvorrichtung kann die Prüfoberfläche der Prüffläche 10 mit zur Abtastung notwendigen Vorrichtungen oder Ausgestaltungen versehen sein; bspw. einem entsprechenden Abtastraster und dergleichen.

Um eine genaue Simulation über die gesamte Höhe der Prüfvorrichtung 1 zu gewährleisten, erstrecken sich die jeweiligen Bereiche A, B, C, D bzw. ein Abtastraster und dergleichen vorzugsweise in vertikaler Richtung über die gesamte Höhe der Prüffläche 10.

Im Falle einer lösbar vorgesehenen Prüffläche 10 ist es auch denkbar, dass die gesamte Prüfoberfläche der Prüffläche 10 (also die Flächenseite der Prüffläche, auf der das Tastrad abrollt bzw. ein Abtastraster oder dergleichen vorgesehen ist; also die nach außen gerichtete Fläche) dieselbe Obeflächenbeschaffenheit aufweist, und eine Veränderung der Oberflächenbeschaffenheit zur Simulation anderer Bedingungen durch Austausch der Prüffläche 10 mit einer Prüffläche 10 mit entsprechend anderer Obeflächenbeschaffenheit erfolgt.

Es ist ferner denkbar, dass die Plattform 2 im Bereich der Prüffläche 10 oder die Prüffläche 10 selbst auf Ihrer der Prüfoberfläche abgewandten Seite (also der der Plattform 2 zugewandten Seite) mit einer Temperaturvorrichtung, bspw. in Form einer Kühlvorrichtung (bspw. Kühlschlangen, durch die ein Kühlfluid geleitet werden kann, oder dergleichen) und/oder einer Heizvorrichtung (bspw. Heizschlangen, durch die ein heißes Fluid geleitet werden kann, oder elektrische Heizstäbe, oder dergleichen) ausgestattet sein kann, um die Prüffläche 10 auf eine vorbestimmte Temperatur einzustellen, also abzukühlen bzw. zu erwärmen und die Temperatur vorzugsweise konstant (also auf einem konstanten Temperaturwert) zu halten, um die Funktionsfähigkeit der Nachführvorrichtung auch auf heißen bzw. kalten Flugzeugrümpfen zu simulieren.

Die Prüffläche 10 kann ferner eine gewölbte Oberflächenkontur aufweisen. In diesem Fall kann die Simulation einer Außenkontur eines Flugzeugrumpfes verbessert werden. Ist die Prüffläche 10 zudem lösbar mit der Plattform 2 verbunden, kann eine Prüffläche 10 entsprechend der Flugzeugrumpfaußenwand zur Überprüfung der Nachführvorrichtung für bestimmte Flugzeugtypen gezielt ausgewählt werden. Es ist alternativ oder zusätzlich auch denkbar, dass die Prüffläche eine individuell wölbbare Oberflächenkontur aufweist. In diesem Fall kann die Außenkontur der Prüffläche einfach an eine äquivalente Kontur eines bestimmten Flugzeugtyps angepasst werden, ohne die Prüffläche auszutauschen. Eine wölbbare Prüffläche kann bspw. dadurch erreicht werden, dass die Prüffläche 10 als plattenartiges Element ausgebildet ist, welches auf seiner der Prüfoberfläche abgewandten Seite über seine Fläche verteilt mit in ihrer Länge verstellbaren Hubzylindern versehen ist. Durch Ausfahren der entsprechenden Hubzylinder um einen entsprechenden Betrag und somit Auswölben der Prüffläche 10 an den entsprechenden Stellen auf der Rückseite der Prüfoberfläche kann somit eine Außenkontur der Prüffläche 10 erreicht werden, die der eines bestimmten Flugzeugrumpfes entspricht. Es sind jedoch auch andere bekannte Maßnahmen zum Auswölben bspw. eines plattenartigen Elementes von der Erfindung mit umfasst.

Die Prüfvorrichtung 1 weist ferner vorzugsweise eine Steuerung zum Ansteuern der Verfahrvorrichtung 3 auf. In einer besonders bevorzugten Ausführungsform weist die Steuerung wenigstens ein Bedienelement bzw. Bedienpult 11, 11 auf. Wie der Figur 1 zu entnehmen ist, kann das Bedienpult 11 auf der Basis der Prüfvorrichtung 1, bspw. in einem unteren Bereich des Rahmens 8 vorgesehen sein. Somit kann das Prüfpersonal sicher vom Boden aus die Prüfvorrichtung 1 bedienen. Alternativ oder zusätzlich kann ein Bedienpult 11 auch an der Plattform 2 selbst vorgesehen sein, vorzugsweise in der Nähe oder auf der Prüffläche 10. Es ist somit möglich, dass das Bedienpersonal die Überprüfung in unmittelbarer Nähe zu den mechanischen Komponenten der Nachführvorrichtung durchführen kann (bspw. von der Gangwayplattform aus), ohne sich dabei in Gefahr begeben zu müssen. Ferner alternativ oder zusätzlich kann das Bedienelement 11 als Fernsteuereinrichtung vorgesehen bzw. ausgebildet sein, um einerseits die Flexibilität der Vorrichtung zu erhöhen und andererseits bei Verwendung nur eines Bedienelementes 11 dieses unabhängig von dem Aufenthaltsort des das Bedienelement 11 bedienenden Prüfpersonals einzusetzen. Dabei können die Bedienelemente 11, 11 in der in Figur 1 gezeigten Ausführungsform bspw. lösbar an den entsprechenden Bereichen der Prüfvorrichtung 1 anbringbar sein, so dass in Bereichen, in denen das Prüfpersonal zusätzlichen Handlingbedarf hat, nicht noch das Bedienelement 11 mit sich in den Händen führen muss.

Des Weiteren weist die Prüfvorrichtung 1 eine Messvorrichtung 12 zum Bestimmen einer Abweichung der vertikalen Nachführung der zu prüfenden Gangway auf. Die Messvorrichtung 12 weist gemäß Figur 1 beispielsweise eine Messskala auf. Durch Vergleich der abgelesenen Werte bzw. Höhe der Gangwayplattform der Gangway bzgl. der Messskala 12 vor der Überprüfung und nach dem Verfahren der Plattform 2 zur Simulation einer Flugzeugrumpfbewegung kann die Genauigkeit der Nachführvorrichtung (also deren tatsächliche Abweichung) bestimmt werden.

Im Folgenden soll ein Beispiel einer entsprechenden Prüfung mit Messskala beschrieben werden. Ausgangspunkt auf der Messskala sei der Wert x. Die Plattform wird nun um 20cm nach unten gefahren, um das Beladen eines Flugzeuges zu simulieren. Nach dem Verfahren der Plattform 2 ist auf der Messskala der Wert x+1cm abzulesen. Die Gangway ist also bei einer Flugzeugbewegung von 20cm nach unten lediglich um 19cm nach unten gefahren, so dass die Differenz bei einer Soll-Nachführung von 20cm bei 1cm liegt. Mit anderen Worten beträgt die Abweichung W somit:

$$W = 1cm/20cm = 0,05 \qquad [1]$$

Die Nachführung muss also gemäß dem obigen Beispiel um den Faktor 1,05 erhöht werden, um eine exakte Nachführung zu gewährleisten. Somit ist es möglich, dass das Bedienpersonal die Nachführvorrichtung der Gangway auf Basis der gewonnenen Ergebnisse der Prüfvorrichtung 1 entsprechend neu einstellt, so dass die Nachregulierung der Gangway adäquat arbeitet. Eine Überprüfung und Neujustierung der Nachführvorrichtung kann bspw. solange durchgeführt werden, bis die Abweichung der Nachführvorrichtung von einem vorbestimmten Sollwert innerhalb eines vorbestimmten Grenzbereichs liegt.

Wenn auch das Ausführungsbeispiel eine Messskala als Messvorrichtung zeigt, so ist die Erfindung nicht auf diese Art von Messvorrichtungen beschränkt. Beispielsweise kann die Messvorrichtung 12 auch Sensoren (nicht gezeigt) zum Erfassen der relativen Bewegung der Gangwayplattform zu der Plattform 2 der Prüfvorrichtung 1 aufweisen; genauer zur Erfassung der Differenz der relativen Höhe zwischen Gangwayplattform und Plattform 2 der Prüfvorrichtung 1 vor und nach einem Verfahren der Plattform 2. Die über die Steuerung (bzw. einer nicht gezeigten Regelung) erfassten Daten können dem Bedienpersonal bspw. über ein Display ausgegeben werden. Auf Basis der so gewonnenen Daten kann eine Korrektur der Nachführvorrichtung vorgenommen werden. Neben den vorgenannten Messvorrichtungen sind auch alle weiteren aus dem Stand der Technik bekannten Messvorrichtungen zum Bestimmen entsprechender Messwerte von der Erfindung mit umfasst.

Wie in Figur 1 gezeigt, kann die Plattform 2 bzw. deren Prüffläche 10 eine horizontal vorstehende Flugzeugtürsimulationsvorrichtung 13 aufweisen. Mittels dieser Vorrichtung 13 kann das Vorhandensein einer Flugzeugtüre zum Testen und Überprüfen eines Türdetektors der Gangway simuliert werden. Die Flugzeugtürsimulationsvorrichtung 13 ist vorzugsweise lösbar an der Plattform 2 bzw. der Prüffläche 10 befestigt, besonders vorzugsweise zusätzlich in vertikaler Richtung (bspw. über Schienen 14) verfahrbar. Ferner vorzugsweise entspricht die Kontur der Unterseite der Flugzeugtürsimulationsvorrichtung 13 der Kontur der Unterseite einer Flugzeugtüre; besonders vorzugsweise der Kontur der Türe des Flugzeugtyps, dessen Außenkontur die Prüffläche 10 aufweist. Es ist somit möglich, zusätzlich einen Türdetektor (bspw. einen Sicherheitsschuh) einer Gangway zu testen, der bei Kontakt mit der Tür eines Flugzeuges ein Absacken (bspw. um 40cm) der Gangwayplattform ausführen soll, um eine Beschädigung des Flugzeugs und der Gangway zu vermeiden. Mittels der Messvorrichtung kann auch das Absacken und eine eventuelle Abweichung von dessen Sollwert einfach bestimmt und somit exakt an der Gangway korrigiert werden.

Beim Anfahren der Gangway an das Flugzeug kann es vorkommen, dass die Gangwayplattform zu hart an den Flugzeugrumpf anfährt. Ebenso ist es denkbar, dass aufgrund der Wölbung des Flugzeugrumpfes und bei Anheben oder Absenken des Flugzeuges aufgrund von Ent- oder Beladevorgängen die Gangway bzw. deren Gangwayplattform bei unzureichender Nachführung stärker (zu stark) an den Flugzeugrumpf gedrückt wird. In beiden Fällen kann eine horizontale Nachführung der Gangwayplattform erforderlich sein. Für diesen Fall kann die Plattform 2 oder wenigstens die Prüffläche 10 ferner derart ausgebildet sein, dass sie in der horizontalen Richtung und ferner vorzugsweise im Wesentlichen orthogonal zur Prüfoberfläche der Prüffläche 10 verfahrbar ist, um einen erhöhten Anpressdruck der Gangwayplattform an dem Flugzeugrumpf zu simulieren und somit die Nachführvorrichtung der Gangway auch in der Horizontalen zu prüfen. In diesem Fall ist die Verfahrvorrichtung ferner zum Verfahren der Plattform 2 bzw. der Prüffläche 10 in horizontaler Richtung ausgebildet und weist vorzugsweise entsprechende zusätzliche Antriebe auf.

Um den Anpressdruck, den die Gangway bzw. deren Gangwayplattform auf die Prüffläche 10 ausübt, erfassen und messen zu können, weist die Prüfvorrichtung 1 vorzugsweise ferner einen Druck(aufnahme)sensor (nicht gezeigt) auf. Der Drucksensor kann bspw. in der Plattform 2 derart vorgesehen sein, dass er Drücke in horizontaler Richtung (also vorzugsweise orthogonal zur Prüffläche 10) erfasst. Vorzugsweise ist die Prüffläche 10 mit der Plattform 2 über die die Drucksensoren aufweisende bzw. aufnehmende Halterungen verbunden. Mittels der Drucksensoren kann auf einfache Weise überprüft werden, ob der Anpressdruck der Gangway auf die Plattform 2 (bspw. bei Überschreiten eines vorgegebenen Schwellenwertes) durch horizontales Verfahren der Gangwayplattform weg von der Plattform 2 der Prüfvorrichtung 1 reduziert wird und somit die Nachführvorrichtung auch in der Horizontalen adäquat arbeitet. Alternativ oder zusätzlich zu den Drucksensoren kann die Messvorrichtung 12 ferner eine in horizontaler Richtung und von der Prüffläche 10 weg gerichtete, nicht dargestellte Messskala aufweisen, die das Bedienpersonal direkt bei der Überprüfung der horizontalen Nachführung von der Gangwayplattform aus ablesen und auswerten kann.

Um die Plattform 2 bzw. Prüffläche 10 in vorbeschriebener Weise horizontal verfahrbar auszubilden, kann die Verfahrvorrichtung 3 bspw. ferner derart ausgebildet sein, dass beispielsweise die Plattform 2 bezüglich des Rahmens 8 oder die Prüffläche 10 bezüglich der Plattform 2 relativ verschiebbar angeordnet ist. Es ist darüber hinaus auch denkbar, dass die gesamte Prüfvorrichtung 1 mobil ausgebildet ist. In diesem Fall weist die mobile Prüfvorrichtung eine verfahrbare Basis (bspw. eine motorisierte Selbstfahrlafette) auf, auf der die vorbeschriebene Prüfvorrichtung 1 angeordnet ist. Die auf diese Weise ausgebildete mobile Prüfvorrichtung kann sodann an die Gangway herangefahren werden und eine Erhöhung des Anpressdruckes simulieren. Eine derart mobile Prüfvorrichtung kann zudem einfach und schnell an jeden Ort auf dem Flughafengelände gefahren werden, so dass die Überprüfung der jeweiligen Gangways direkt im Bereich ihres Einsatzortes durchgeführt werden kann, was die Ausfallzeiten der Gangways deutlich verkürzt. Außerdem kann eine mobile Prüfvorrichtung in einfacher Weise auch zur Überprüfung von Fluggastbrücken bereitgestellt werden, die wiederum fest mit dem Flughafengebäude verbunden sind.

Im Folgenden wird ein Verfahren zur Überprüfung einer Nachführvorrichtung einer Gangway, insbesondere für mobile Passagiertreppen oder Fluggastbrücken, beschrieben. Das erfindungsgemäße Verfahren weist dabei die folgenden Schritte auf:

In einem ersten Schritt interagiert eine Abtastvorrichtung (vorzugsweise eine physischen oder optischen Abtastvorrichtung) der Nachführvorrichtung der Gangway mit der im Wesentlichen vertikal ausgerichteten Prüffläche 10 der höhenverstellbaren Plattform 2 der Prüfvorrichtung 1. Hierzu kann ein Tastrad der Nachführvorrichtung der zu überprüfenden Gangway an die im Wesentlichen vertikal ausgerichtete Prüffläche 10 der höhenverstellbaren Plattform 2 in Anlage bzw. Anschlag gebracht werden. Auch das Interagieren einer optischen Abtastvorrichtung mit der Prüffläche 10, insbesondere einem Raster oder dergleichen auf der Prüfoberfläche, ist denkbar. In einem zweiten Schritt wird die Plattform 2 in vertikaler Richtung mittels der Verfahrvorrichtung 3 (bspw. aufweisend eine mittels Elektromotor 6 angetriebene Endloskette 5) verfahren. Hierbei dreht sich das an der Prüffläche 10 anliegende Tastrad der Gangway durch Abrollen an der Prüffläche 10 und führt zu einem Nachführen der Gangwayplattform in der Vertikalen. Alternativ registriert die optische Abtastvorrichtung bzgl. des Rasters oder dergleichen eine relative Bewegung zu der Prüffläche 10, was zum entsprechenden Nachführen der Gangwayplattform führt. In einem dritten Schritt wird die relative vertikale Abweichung der Gangwayplattform der Gangway zu der Plattform 2 nach der vertikalen Nachführung der zu prüfenden Gangway erfasst und gemessen.

Es ist ferner denkbar, dass neben dem vertikalen Verfahren der Plattform 2 diese auch in horizontaler Richtung senkrecht zur Gangway (Gangwayplattform) hin oder von dieser weg verfahren werden kann. Hierzu umfasst die Verfahrvorrichtung 3 ferner weitere Vorrichtungen zum Verfahren der Plattform 2, der Prüffläche 10 und/ oder der gesamten Prüfvorrichtung 1 in horizontaler Richtung. In diesem Fall wird ferner der Anpressdruck einer Gangwayplattform der Gangway bezüglich der Plattform 2 vorzugsweise mittels eines Druckaufnahmesensors der Plattform 2 und/oder einer in horizontaler Richtung und von der Prüffläche 10 weg gerichteten Messskala nach der horizontalen Nachführung der zu prüfenden Gangway erfasst und gemessen.

Im Anschluss an das Messen der vertikalen und horizontalen Nachführung bzw. deren Abweichung werden die Messergebnisse ausgewertet und im Falle von (zu großen) Abweichungen von einem vorgegebenen (maximalen) Soll-Wert bzw. Toleranzbereich die Gangway-Nachführung entsprechend justiert.

Zudem kann mittels einer Flugzeugtürsimulationsvorrichtung 13 die Funktionsfähigkeit eines Türdetektors der Gangway überprüft und auf Grundlage der Messergebnisse die Einstellung des Detektors bei Abweichung von einem vorgegebenen (maximalen) Soll-Wert ebenfalls justiert werden.

Die Erfindung ist nicht auf das obige Ausführungsbeispiel beschränkt, solange sie von dem Gegenstand der folgenden Ansprüche umfasst ist.

**Patentansprüche**

1. Prüfvorrichtung für Gangways mit Nachführvorrichtung, insbesondere für mobile Passagiertreppen oder Fluggastbrücken, aufweisend:

    eine höhenverstellbare Plattform (2) mit im Wesentlichen vertikal ausgerichteter Prüffläche (10), die derart ausgebildet ist, dass sie mit einer Abtastvorrichtung, vorzugsweise einer physischen oder optischen Abtastvorrichtung, der Nachführvorrichtung der Gangway zu deren Überprüfung interagieren kann,
    eine Verfahrvorrichtung (3) zum Verfahren der Plattform (2) wenigstens in vertikaler Richtung, und
    eine Messvorrichtung (12) zum Bestimmen einer Abweichung einer vertikalen Nachführung der Nachführvorrichtung der zu prüfenden Gangway.

2. Prüfvorrichtung nach Anspruch 1, wobei die Prüffläche (10) derart ausgebildet ist, dass an die Prüffläche (10) ein Tastrad als physische Abtastvorrichtung der Nachführvorrichtung der Gangway zu deren Überprüfung anlegbar ist.

3. Prüfvorrichtung nach Anspruch 2, wobei die Prüffläche (10) Bereiche (A, B, C, D) mit unterschiedlicher Oberflächenbeschaffenheiten mit unterschiedlichem Reibungskoeffizienten aufweist, wobei sich die jeweiligen Bereiche (A, B, C, D) vorzugsweise in vertikaler Richtung über die gesamte Höhe der Prüffläche (10) erstrecken.

4. Prüfvorrichtung nach einem der vorhergehenden Ansprüche, wobei die Prüffläche (10) eine gewölbte oder individuell wölbbare Oberflächenkontur aufweist, um die Außenkontur eines Flugzeugrumpfes zu simulieren.

5. Prüfvorrichtung nach einem der vorhergehenden Ansprüche, wobei die Prüffläche (10) mit der Plattform (2) integral ausgebildet oder lösbar verbunden ist.

6. Prüfvorrichtung nach einem der vorhergehenden Ansprüche, wobei die Plattform (2) entlang vertikaler Schienen (4) geführt und verfahrbar ist.

7. Prüfvorrichtung nach einem der vorhergehenden Ansprüche, wobei die Verfahrvorrichtung (3) eine mechanische, elektrische, hydraulische oder pneumatische Verfahrvorrichtung (3) ist, die vorzugsweise Seilwinden, Flaschenzüge oder Kettentriebe (5, 7), vorzugsweise angetrieben mittels eines Elektromotors (6), oder Pneumatikzylinder oder Hydraulikzylinder aufweist.

8. Prüfvorrichtung nach einem der vorhergehenden Ansprüche, ferner aufweisend eine Absturzsicherung zum Vermeiden eines ungebremsten Herabfallens der Plattform (2) im Störungsfall, wobei die Absturzsicherung vorzugsweise einen Geschwindigkeitsbegrenzer aufweist, der derart ausgebildet ist, dass er bei Überschreitung eines vorgegebenen Geschwindigkeitsgrenzwertes den Antrieb abgeschaltet und die Plattform (2) vorzugsweise mechanisch zum Stillstand bremst.

9. Prüfvorrichtung nach einem der vorhergehenden Ansprüche, wobei die Plattform (2) im Bereich der Prüffläche (10) oder die Prüffläche (10) eine Temperaturvorrichtung, vorzugsweise eine Kühlvorrichtung und/oder eine Heizvorrichtung, aufweist, um die Prüffläche (10) auf eine vorbestimmte Temperatur einzustellen, vorzugsweise abzukühlen bzw. zu erwärmen, und die Temperatur vorzugsweise auf einem konstanten Wert zu halten.

**10.** Prüfvorrichtung nach einem der vorhergehenden Ansprüche, wobei die Plattform (2) oder die Prüffläche (10) eine horizontal vorstehende Flugzeugtürsimulationsvorrichtung (13) aufweist, mittels der das Vorhandensein einer Flugzeugtüre zum Testen eines Türdetektors der Gangway simuliert werden kann.

**11.** Prüfvorrichtung nach einem der vorhergehenden Ansprüche, wobei die Messvorrichtung eine Messskala (12) oder einen Sensor umfasst.

**12.** Prüfvorrichtung nach einem der vorhergehenden Ansprüche, wobei die Plattform (2) oder die Prüffläche (10) ferner in der horizontalen Richtung und vorzugsweise orthogonal zur Prüfoberfläche der Prüffläche (10) verfahrbar ist, um eine Nachführvorrichtung der Gangway in der Horizontalen zu prüfen, wobei die Verfahrvorrichtung (3) ferner zum Verfahren der Plattform (2) bzw. der Prüffläche (10) in horizontaler Richtung ausgebildet ist.

**13.** Prüfvorrichtung nach Anspruch 12, ferner aufweisend einen Drucksensor zum Messen des Anpressdruckes einer Gangwayplattform einer Gangway.

**14.** Prüfvorrichtung nach einem der Ansprüche 12 oder 13, wobei die Messvorrichtung eine in horizontaler Richtung und von der Prüffläche (10) weg gerichtete Messskala aufweist.

**15.** Prüfvorrichtung nach einem der vorhergehenden Ansprüche, ferner aufweisend ein mit der Plattform (2) verbundenes Gegengewicht, um das Gewicht der Plattform (2) zu kompensieren, wobei das Gegengewicht vorzugsweise über einen Seilzug mit der Plattform (2) verbunden ist, der besonders vorzugsweise über eine an einem Rahmen (8) der Prüfvorrichtung (1) aufgehängte Umlenkvorrichtung geführt ist.

**16.** Prüfvorrichtung nach einem der vorhergehenden Ansprüche, ferner aufweisend eine Steuerung zum Ansteuern der Verfahrvorrichtung (3), wobei die Steuerung vorzugsweise wenigstens ein Bedienpult (11, 11) aufweist, welches auf der Basis der Prüfvorrichtung (1) und/oder an der Plattform (2) und/oder als Fernsteuereinrichtung vorgesehen ist.

**17.** Mobile Prüfvorrichtung aufweisend eine verfahrbare Basis, auf der eine Prüfvorrichtung (1) gemäß einem der vorhergehenden Ansprüche angeordnet ist.

**18.** Verfahren zur Überprüfung einer Nachführvorrichtung einer Gangway, insbesondere für mobile Passagiertreppen oder Fluggastbrücken, unter Verwendung einer Prüfvorrichtung nach einem der vorhergehenden Ansprüche, aufweisend die Schritte:

Interagieren einer vorzugsweise physischen oder optischen Abtastvorrichtung der Nachführvorrichtung der Gangway mit der Prüffläche (10) der Zhöhenverstellbaren Plattform (2) der Prüfvorrichtung (1), Verfahren der Plattform (2) in vertikaler Richtung mittels der Verfahrvorrichtung (3), und Erfassen und Messen der relativen vertikalen Abweichung einer Gangwayplattform der Gangway zu der Plattform (2) nach der vertikalen Nachführung der zu prüfenden Gangway.

**19.** Verfahren nach Anspruch 18, ferner aufweisend die Schritte nach dem Beginn der Interaktion der Abtastvorrichtung mit der Prüffläche (10):

Verfahren der Plattform (2) in horizontaler Richtung senkrecht zur Gangway hin oder von dieser weg, und Erfassen und Messen des Anpressdruckes der Gangwayplattform der Gangway bezüglich der Plattform (2) mittels eines Druckaufnahmesensors der Plattform (2) und/oder einer in horizontaler Richtung und von der Prüffläche (10) weg gerichteten Messskala nach der horizontalen Nachführung der zu prüfenden Gangway.

**20.** Verfahren nach Anspruch 18 oder 19, wobei der Schritt der Interaktion der physischen Abtastvorrichtung mit der Prüffläche (10) das Anlegen eines Tastrades der Nachführvorrichtung der Gangway an die im Wesentlichen vertikal ausgerichtete Prüffläche (10) der höhenverstellbaren Plattform (2) der Prüfvorrichtung (1) umfasst.

**Claims**

**1.** Testing device for gangways with an adjustment device, particularly for mobile passenger steps or passenger boarding bridges, comprising:

a height-adjustable platform (2) having a substantially vertically aligned test area (10) which is embodied so that it can interact with a scanning device, preferably a physical or optical scanning device, of the adjustment device for the gangway, in order to check it,
a moving means (3) for moving the platform (2) at least in the vertical direction, and
a measuring device (12) for determining a deviation in a vertical adjustment of the adjustment device for the gangway that is to be tested.

2. Testing device according to claim 1, wherein the test area (10) is embodied so that a scanning wheel can be applied to the test area (10) as a physical sensing means of the adjustment device for the gangway in order to check it.

3. Testing device according to claim 2, wherein the test area (10) comprises regions (A, B, C, D) with different surface qualities having different coefficients of friction, the respective regions (A, B, C, D) preferably extending vertically over the full height of the test area (10).

4. Testing device according to one of the preceding claims, wherein the test area (10) has a contour that is convex or can be individually cambered in order to simulate the outer contour of an aircraft fuselage.

5. Testing device according to one of the preceding claims, wherein the test area (10) is integrally formed with the platform (1) or releasably connected thereto.

6. Testing device according to one of the preceding claims, wherein the platform (2) is guided and movable along vertical rails (4).

7. Testing device according to one of the preceding claims, wherein the moving means (3) is a mechanical, electrical, hydraulic or pneumatic moving means (3) which preferably comprises cable winches, hoists or chain drives (5, 7), preferably driven by an electric motor (6), or pneumatic cylinders or hydraulic cylinders.

8. Testing device according to one of the preceding claims, further comprising an anti-fall guard for preventing unrestrained collapse of the platform (2) in the event of a fault, the anti-fall guard preferably comprising a speed limiter which is embodied so that when a predetermined speed threshold is exceeded the drive is switched off and the platform (2) is preferably mechanically brought to a standstill.

9. Testing device according to one of the preceding claims, wherein the platform (2) in the region of the test area (10), or the test area (10) itself, comprises a temperature device, preferably a cooling device and/or a heating device, for bringing the test area (10) to a predetermined temperature, preferably cooling or heating it, and preferably maintaining the temperature at a constant level.

10. Testing device according to one of the preceding claims, wherein the platform (2) or the test area (10) comprises a horizontally projecting aircraft door simulator (13), by means of which the presence of an aircraft door can be simulated in order to test a door detector of the gangway.

11. Testing device according to one of the preceding claims, wherein the measuring device comprises a measuring scale (12) or a sensor.

12. Testing device according to one of the preceding claims, wherein the platform (2) or the test area (10) is further movable in the horizontal direction and preferably perpendicular to the test surface of the test area (10), in order to test an adjustment device for the gangway in the horizontal direction, the moving means (3) further being embodied to move the platform (2) or the test area (10) in the horizontal direction.

13. Testing device according to claim 12, further comprising a pressure sensor for measuring the contact pressure of a gangway platform of a gangway.

14. Testing device according to one of claims 12 or 13, wherein the measuring device comprises a measuring scale that is directed in the horizontal direction and away from the test area (10).

15. Testing device according to one of the preceding claims, further comprising a counterweight connected to the platform (2) for compensating the weight of the platform (2), the counterweight preferably being connected to the platform (2) via a cable which is particularly preferably guided by means of a deflecting device suspended from a frame (8) of the testing device (1).

16. Testing device according to one of the preceding claims, further comprising a control for actuating the moving means (3), the control preferably comprising at least one operating console (11, 11) which is provided on the base of the testing device (1) and/or on the platform (2) and/or as a remote control apparatus.

17. Mobile testing device comprising a movable base on which a testing device (1) according to one of the preceding claims is arranged.

18. Method for testing an adjustment device for a gangway, particularly for mobile passenger steps or passenger boarding bridges, using a test device according to one of the preceding claims, comprising the steps of:

causing a preferably physical or optical scanning device of the adjustment device for the gangway to interact with the test area (10) of the height-adjustable platform (2) of the testing device (1),
moving the platform (2) in the vertical direction by means of the moving means (3), and
detecting and measuring the relative vertical deviation of a gangway platform of the gangway to the platform (2) after the vertical adjustment of the gangway that is to be tested.

19. Method according to claim 18, further comprising the following steps after the start of the interaction of the scanning device with the test area (10):

moving the platform (2) in the horizontal direction perpendicular to the gangway, towards or away from said gangway, and
detecting and measuring the contact pressure of the gangway platform of the gangway relative to the platform (2) by means of a pressure recording sensor of the platform (2) and/or a measuring scale directed horizontally and away from the test area (10) after the horizontal adjustment of the gangway that is to be tested.

20. Method according to claim 18 or 19, wherein the step of interaction of the physical scanning device with the test area (10) encompasses applying a scanning wheel of the adjustment device of the gangway to the substantially vertically aligned test area (10) of the height-adjustable platform (2) of the testing device (1).


**Revendications**

1. Dispositif de test pour passerelles dotées d'un dispositif de guidage asservi, en particulier pour escaliers mobiles pour passagers ou pour passerelles d'embarquement de passagers, ledit dispositif de test comprenant :

une plate-forme (2) réglable en hauteur présentant une surface de test (10) qui est orientée sensiblement verticalement et qui est conformée de façon à pouvoir interagir avec un dispositif de détection, de préférence un dispositif de détection physique ou optique, du dispositif de guidage asservi de la passerelle afin de contrôler celle-ci,
un dispositif de déplacement (3) pour déplacer la plate-forme (2) au moins dans une direction verticale, et
un dispositif de mesure (12) pour déterminer un écart d'un guidage asservi vertical du dispositif de guidage asservi de la passerelle à tester.

2. Dispositif de test selon la revendication 1, dans lequel la surface de test (10) est conformée de telle sorte qu'un galet palpeur peut être appliqué sur la surface de test (10), le galet palpeur se présentant sous la forme d'un dispositif de détection physique du dispositif de guidage asservi de la passerelle afin de contrôler celle-ci.

3. Dispositif de test selon la revendication 2, dans lequel la surface de test (10) comporte des régions (A, B, C, D) dotées de différentes structures de surface ayant des coefficients de frottement différents, les régions respectives (A, B, C, D) s'étendant de préférence dans une direction verticale sur toute la hauteur de la surface de test (10).

4. Dispositif de test selon l'une des revendications précédentes, dans lequel la surface de test (10) présente un contour de surface arrondie ou pouvant être arrondie individuellement afin de simuler le contour extérieur d'un fuselage d'aéronef.

5. Dispositif de test selon l'une des revendications précédentes, dans lequel la surface de test (10) est intégrée à la plate-forme (2) ou reliée à celle-ci de manière amovible.

6.  Dispositif de test selon l'une des revendications précédentes, dans lequel la plate-forme (2) est guidée et déplaçable le long de rails verticaux (4).

7.  Dispositif de test selon l'une des revendications précédentes, dans lequel le dispositif de déplacement (3) est un dispositif de déplacement (3) mécanique, électrique, hydraulique ou pneumatique, qui comporte de préférence des treuils de câble, des palans ou des transmissions par chaîne (5, 7), de préférence entraînés par un moteur électrique (6), ou un vérin pneumatique ou un vérin hydraulique.

8.  Dispositif de test selon l'une des revendications précédentes, comprenant en outre une protection antichute destinée à éviter la chute libre de la plate-forme (2) en cas de défaillance, le dispositif antichute comportant de préférence un dispositif de limitation de vitesse qui est conformé de façon à arrêter l'entraînement et freiner la plate-forme (2) de préférence mécaniquement jusqu'au repos en cas de dépassement d'une valeur limite de vitesse prédéterminée.

9.  Dispositif de test selon l'une quelconque des revendications précédentes, dans lequel la plate-forme (2) dans la région de la surface de test (10), ou la surface de test (10) comporte un dispositif de température, de préférence un dispositif de refroidissement et/ou un dispositif de chauffage, destiné à régler, de préférence refroidir respectivement chauffer, la surface de test (10) à une température prédéterminée, et à maintenir la température de préférence à une valeur constante.

10.  Dispositif de test selon l'une des revendications précédentes, dans lequel la plate-forme (2) ou la surface de test (10) comporte un appareil de simulation de porte d'aéronef (13) faisant saillie horizontalement au moyen duquel la présence d'une porte d'aéronef peut être simulée afin de tester un détecteur de porte de la passerelle.

11.  Dispositif de test selon l'une des revendications précédentes, dans lequel le dispositif de mesure comporte une échelle de mesure (12) ou un capteur.

12.  Dispositif de test selon l'une des revendications précédentes, dans lequel la plate-forme (2) ou la surface de test (10) est en outre déplaçable dans la direction horizontale et de préférence orthogonalement à l'aire de test de la surface de test (10) afin de tester un dispositif de guidage asservi de la passerelle dans le plan horizontal, le dispositif de déplacement (3) étant en outre conformé pour déplacer la plate-forme (2) ou la surface de test (10) dans la direction horizontale.

13.  Dispositif de test selon la revendication 12, comprenant en outre un capteur de pression destiné à mesurer la pression de contact d'une plate-forme d'une passerelle.

14.  Dispositif de test selon l'une des revendications 12 ou 13, dans lequel le dispositif de mesure comporte une échelle de mesure orientée dans une direction horizontale et partant de la surface de test (10).

15.  Dispositif de test selon l'une des revendications précédentes, comprenant en outre un contrepoids relié à la plate-forme (2) et destiné à compenser le poids de la plate-forme (2), le contrepoids étant relié à la plate-forme (2) de préférence par un câble qui est guidé de façon particulièrement préférée par un dispositif de déviation suspendu à un cadre (8) du dispositif de test (1).

16.  Dispositif de test selon l'une des revendications précédentes, comprenant en outre une commande destinée à commander le dispositif de déplacement (3), la commande comportant de préférence au moins un pupitre de commande (11, 11) qui est prévu à la base du dispositif de test (1) et/ou au niveau de la plate-forme (2) et/ou sous la forme d'une télécommande.

17.  Dispositif de test mobile comprenant une base mobile sur laquelle est disposé un dispositif de test (1) selon l'une des revendications précédentes.

18.  Procédé de contrôle d'un dispositif de guidage asservi d'une passerelle, en particulier pour escaliers mobiles pour passagers ou pour passerelles d'embarquement de passagers, en utilisant un dispositif de test selon l'une des revendications précédentes, le procédé comportant les étapes consistant à :

   faire interagir un dispositif de détection de préférence physique ou optique du dispositif de guidage asservi de la passerelle avec la surface de test (10) de la plate-forme (2) réglable en hauteur du dispositif de test (1), déplacer la plate-forme (2) dans une direction verticale au moyen du dispositif de déplacement (3), et détecter et mesurer l'écart vertical relatif d'une plate-forme de la passerelle par rapport à la plate-forme (2) en fonction du guidage asservi vertical de la passerelle à tester.

19. Procédé selon la revendication 18, comprenant en outre les étapes consistant, après le début de l'interaction du dispositif de détection avec la surface de test (10), à :

déplacer la plate-forme (2) dans une direction horizontale perpendiculaire à la passerelle dans le sens de rapprochement ou d'éloignement par rapport à celle-ci, et détecter et mesurer la pression de contact de la plate-forme de la passerelle par rapport à la plate-forme (2) au moyen d'un capteur de pression de la plate-forme (2) et/ou d'une échelle de mesure, orientée dans une direction horizontale et partant de la surface de test (10), en fonction du guidage asservi horizontal de la passerelle à tester.

20. Procédé selon la revendication 18 ou 19, dans lequel l'étape de l'interaction du dispositif de détection physique avec la surface de test (10) comporte l'application d'un galet palpeur du dispositif de guidage asservi de la passerelle contre la surface de test (10), orientée sensiblement verticalement, de la plate-forme (2) réglable en hauteur du dispositif de test (1).

FIG. 1

EP 2 572 993 B1